# EUROPÄISCHE PATENTANMELDUNG

(11) **EP 0 556 470 A1**
(43) Veröffentlichungstag der Anmeldung: **25.08.1993**
(21) Anmeldenummer: 92120797.3
(22) Anmeldetag: 05.12.1992
(51) Int. Cl.: B05D 7/14, B32B 15/00, C23D 5/00, C23D 13/00

(54) **Blech für Lagertanks oder Rohre**

(30) Priorität: 19.02.1992 DE 4204874
(71) Anmelder: Bockhacker, Bernd, D-48369 Saerbeck (DE)
(72) Erfinder: Bockhacker, Bernd, D-48369 Saerbeck (DE)
(74) Vertreter: Habbel, Hans-Georg, Dipl.-Ing.

(57) **Zusammenfassung**

Bei einem Blech, welches für Lagertanks, Rohre oder ähnliche Anwendungsfälle geeignet ist, schlägt die Erfindung vor, auf der Außenseite eine zweischichtige Emaillierung vorzusehen und auf der Innenseite eine Emailschicht und eine rauhe Silikatschicht auf das Blech aufzubringen, die anschließend mit einem Kunststoff überzogen wird. Auf diese Weise wird das Blech besonders chemie- kalienbeständig und mechanisch beanspruchbar.

## Beschreibung

Die Erfindung bezieht sich auf ein Blech für Lagertanks oder Rohre sowie auf ein Verfahren zu dessen Herstellung.

Derartige Bleche sind als emaillierte Bleche vielfach im Einsatz. Die Emailschicht stellt eine chemisch neutrale Beschichtung der Bleche dar, die auch unter hygienischen Gesichtspunkten vorteilhaft ist, so daß derartige Bleche beispielsweise lebensmitteltechnischen oder hygienischen Anforderungen genügen und beispielsweise für Tanks oder Rohre zur Aufnahme und Führung von Trinkwasser verwendet werden können.

Problematisch bei emaillierten Blechen ist die Gefahr der Punktdurchrostung, da Poren und Blasen, die im Email notwendigerweise vorhanden sind, zu einer punktuellen Verletzung der Emailschicht führen können, in der Flüssigkeit an das eigentliche Blech herantreten kann und dieses korrodieren kann.

Bei kunststoffbeschichteten Blechen für Lagertanks und dgl. und Rohre besteht das Problem der innigen Verbindung zwischen dem Kunststoff einerseits und dem eigentlichen Blech andererseits. Hier besteht die Fehlerquelle in einer möglichen Unterwanderung des Kunststoffes, so daß ein ggf. großflächiger Zugang zum Blech und ein dementsprechend großflächiger Korrosionsangriff auf das Blech stattfinden kann. Über einer derartig angegriffenen Fläche kann der Kunststoffüberzug ggf. noch in Takt sein und so dasAusmaß des Fehlers am Blech nicht sofort sichtbar werden lassen.

Der Erfindung liegt die Aufgabe zugrunde, ein gattungsgemäßes Blech dahingehend zu verbessern, daß ein besonders dichtes und chemikalienbeständiges Blech geschaffen wird.

Diese der Erfindung zugrundeliegende Aufgabe wird durch die Ausbildung des Bleches nach Anspruch 1 gelöst.

Die Erfindung schlägt mit anderen Worten vor, auf der üblicherweise als Innenseite des Behälters oder Rohres angeordneten Oberfläche des Blechs auf einer Grundemailschicht zunächst eine rauhe Silikatschicht aufzutragen und diese anschließend mit Kunststoff zu versiegeln. Auf diese Weise wird eine innige Verbindung zwischen dem Kunststoff und dem Blech mittelbar geschaffen. Die Silikatschicht dient als Haftschicht unter dem Kunststoff, und die Emaillierung bietet eine innige Verzahnung in Form eines Verbundwerkstoffes mit dem Stahl der Blechtafel.

Gegenüber dem abrasiven Effekt mancher Stoffe in den Lagertanks dient die Silikatschicht mit ihrer sehr hohen Härte als Schutzschicht. Sollte die Kunststoffbeschichtung an ihrer Oberfläche durch diesen abrasiven Effekt abgetragen werden, so schützen die vorspringenden rauhen Stellen der Silikatschicht den Kunststoff in den Mulden und Poren der Silikatschicht davor, ebenfalls abgetragen zu werden. Auf diese Weise ist eine besonders hohe Dichtigkeit dieser Poren durch den eingelagerten Kunststoff gewährleistet, so daß der Effekt der Punktkorrosion durch die kunststoffplombierten Hohlräume nicht auftreten kann. Andererseits bewirkt die Rauhigkeit der Silikatschicht eine gute Verzahnung der Silikatschicht mit dem Kunststoff, daß ein großflächiges Abtragen des Kunststoffes ebenfalls nicht erfolgen kann.

Weiterhin wird erfindungsgemäß ein derartiges Blech hergestellt, indem vor dem Auftragen des Kunststoffes die silikatbeschichtete Plattenfläche mit einem Hochspannungsbesen abgetastet wird. Auf diese Weise werden zwangsläufig Poren oder Blasen geöffnet und aufgesprengt, die in der Silikatschicht vorhanden sind. Diese können anschließend mit dem Kunststoff gefüllt werden.

Üblicherweise wird bei der Materialprüfung gattungsgemäßer Bleche eine Prüfspannung von 1,0 bis 1,5 kV verwendet. Bei der Kontrolle des beschriebenen Bleches kann vorteilhafterweise eine höhere als diese Prüfspannung angewendet werden.

Vorteilhaft wird der Kunststoff in flüssiger Form aufgebracht. Bei entsprechend eingestellter Viskosität des Kunststoffes kann sichergestellt werden, daß der Kunststoff tief in die Poren eindringt und diese sicher versiegelt.

Weiterhin wird vorteilhaft der Kunststoff luftlos aufgespritzt, so daß nicht etwa Druckluft zunächst in die Poren geblasen wird und die Poren anschließend und nur teilweise von einem Kunststofftröpfchen verschlossen werden. Das tiefe Eindringen und sichere Versiegeln der Poren wird durch den luftlosen Kunststoffauftrag gefördert.

Schließlich wird es als vorteilhaft angesehen, den Auftrag des Kunststoffes in einer evakuierten Kabine vorzunehmen. Auf diese Weise wird der oben erwähnte Effekt vermieden, daß der Kunststoff lediglich die Überfläche einer Pore versiegelt, die in ihrem tieferen Porengrund mit Luft gefüllt ist. Zudem wird bei einem derartigen Verfahren bewirkt, daß der noch nicht ausgehärtete Kunststoff vom umgebenden Luftdruck nach Öffnen der evakuierten Kabine in die Poren eingedrückt wird und diese besonders innig ausfüllt.

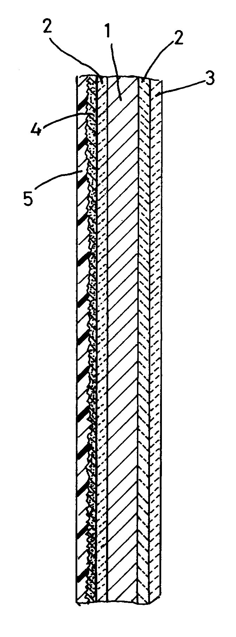

Die Erfindung wird anhand der Zeichnung im folgenden näher erläutert.

In der Zeichnung ist mit 1 ein Stahlblech bezeichnet, welches zur Schaffung eines Lagertanks verwendet werden kann. Das Stahlblech 1 weist auf beiden Überflächen eine Grundemailschicht 2 und auf seiner Außenseite eine Deckemailschicht 3 auf.

Auf der anderen Seite, die später die Innenseite des Behälters oder Rohres bildet, weist das Stahlblech 1 die Grundemailschicht 2 und eine Silikatschicht 4 auf, deren Oberfläche rauh ausgebildet ist. Die Oberfläche der Silikatschicht 4 wird durch eine Kunststoffbeschichtung 5 versiegelt, die tief in die Poren der Silikatschicht 4 eindringt und aufgrund der Oberflächenrauhigkeit der Silikatschicht 4 mit dieser Silikatschicht 4 innig verzahnt ist.

Erfindungsgemäß wird auf das Stahlblech 1 zunächst die Grundemailschicht 2 aufgetragen und eingebrannt. Anschließend erfolgt der gleichzeitige Auftrag der Deckemailschicht 3 auf der einen Seite sowie der Silikatschicht 4 auf der anderen Seite des Bleches 1.

Bevor die Kunststoffbeschichtung 5 auf die Silikatschicht 4 aufgebracht wird, wird die Silikatschicht 4 erfindungsgemäß mit einem Hochspannungsbesen abgetastet, bei dem die angelegte Spannung ein Mehrfaches der üblicherweise verwendeten Prüfspannungen von 1 oder 1,5 kV beträgt. Die im Email befindlichen losen Blasen oder doppelt aufeinanderliegenden Blasen werden bei dieser Behandlung aufgesprengt.

Anschließend erfolgt der Auftrag des Kunststoffes in einer geschlossenen Spritzkabine, die unter Vakuum steht. Das dabei angewandte Spritzverfahren ist luftlos und erhält somit das Vakuum in der Spritzkabine. Die Folge ist, daß ein Eindringen des Kunststoffes in die Hohlstellen und in die erzeugten Kraterlöcher ohne Lufteinschluß erfolgen kann.

Beim Verlassen der Spritzkabine wird das Blech dem Atmosphärendruck ausgesetzt, so daß hier eine Nachbehandlung des Kunststoffes erfolgt, falls dieser noch nicht völlig ausgehärtet ist. Durch den Atmosphärendruck wird der Kunststoff nämlich verdichtet und in die Poren gepreßt, so daß er ggf. in kleinste Verzweigungen eindringt und eine besonders innige Verzahnung bewirkt.

Es entsteht eine absolut dichte und chemikalienbeständige sowie eine mit hoher Widerstandsmessung prüfbare Platte.

Gegenüber den bisher bekannten Blechen für Lagertanks oder ähnliche Anwendungszwecke weist die erfindungsgemäße Platte den Vorteil auf, daß einerseits durch die Emaillierung eine Haftschicht erzeugt wird, die als Verbundwerkstoff gilt, da Stahl und Email beim Einbrennen von fast 900^{o} C in Lösung gehen.

Durch die rauhe Silikatschicht wird eine hohe Säuren- und Laugenbeständigkeit des Bleches bewirkt. Zudem stellt diese Schicht eine sehr abriebsfeste Schicht durch die vorstehenden Silikatkörner dar, so daß die vom Kunststoff ausgefüllten Kraterlöcher weiterhin gefüllt bleiben und ein weiterer Abtrag des Kunststoffes durch die vorstehenden Silikatkörner verhindert wird. Die Rauhigkeit nicht nur der Oberfläche der Silikatschicht 4, sondern auch in den Kraterlöchern bewirkt eine besonders innige Verzahnung und eine optimale Haftung für den aufgebrachten bzw. eingebrachten Kunststoff. Hierdurch kann der Kunststoff nicht unterwandert werden.

Im Bereich der Wasseraufbereitung findet eine besonders starke Behälterbeanspruchung statt, wenn stark saure und gleichzeitig stark basische Flüssigkeiten zusammen im Behälter vorliegen und miteinander vermischt werden. Auch bei derartig anspruchsvollen Anwendungsfällen ist der Einsatz erfindungsgemäßer Bleche problemlos möglich und bietet gegenüber den bekannten, gattungsgemäßen Blechen erhebliche Vorteile.

## Patentansprüche

1. Blech für Lagertanks oder Rohre mit einer wenigstens zweischichtigen Emaillierung auf der einen Oberfläche, gekennzeichnet durch eine rauhe Silikatschicht (4), kunststoffüberzogen auf der anderen Oberfläche.

2. Verfahren zur Herstellung eines Blechs nach Anspruch 1, dadurch gekennzeichnet, daß vor dem Auftragen des Kunststoffes die silikatbeschichtete Plattenfläche mit einem Hochspannungsbesen abgetastet wird.

3. Verfahren nach Anspruch 2, dadurch gekennzeichnet, daß an den Besen eine Spannung höher als 1,5 kV angelegt wird.

4. Verfahren nach Anspruch 2 oder 3, dadurch gekennzeichnet, daß der Kunststoff flüssig aufgetragen wird.

5. Verfahren nach Anspruch 4, dadurch gekennzeichnet, daß der Kunststoff luftlos aufgespritzt wird.

6. Verfahren nach Anspruch 4 oder 5, dadurch gekennzeichnet, daß der Auftrag des Kunststoffes in einer evakuierten Kabine erfolgt.
